# EUROPEAN PATENT SPECIFICATION

(11) **EP 3 629 652 B1**
(45) Date of publication and mention of the grant of the patent: **18.09.2024**
(21) Application number: 18822695.5
(22) Date of filing: 26.06.2018
(51) Int. Cl.: H04W 88/04, H04L 1/18, H04L 5/00, H04W 72/04

(54) **DATA TRANSMISSION METHOD, ACCESS NETWORK DEVICE AND TERMINAL DEVICE**
DATENÜBERTRAGUNGSVERFAHREN, ZUGANGSNETZWERKVORRICHTUNG UND ENDGERÄT
PROCÉDÉ DE TRANSMISSION DE DONNÉES, DISPOSITIF DE RÉSEAU D'ACCÈS, ET DISPOSITIF TERMINAL

(30) Priority: 30.06.2017 CN 201710522431
(43) Date of publication of application: 01.04.2020
(73) Proprietor: Huawei Technologies Co., Ltd., Longgang District Shenzhen, Guangdong 518129 (CN)
(72) Inventor: SU, Hongjia, Shenzhen Guangdong 518129 (CN); ZHU, Jun, Shenzhen Guangdong 518129 (CN); PANG, Jiyong, Shenzhen Guangdong 518129 (CN)
(74) Representative: Pfenning, Meinig & Partner mbB
(86) International application number: PCT/CN2018/092800
(87) International publication number: WO 2019/001409

(56) References cited:
- WO-A1-2016/120686
- WO-A1-2016/120686
- WO-A1-2017/026970
- WO-A1-2017/049595
- CN-A- 105 451 211
- US-A1- 2017 054 540

## Description

### TECHNICAL FIELD

This application relates to communications technologies, and in particular, to a data transmission method, an access network device, and a terminal device.

### BACKGROUND

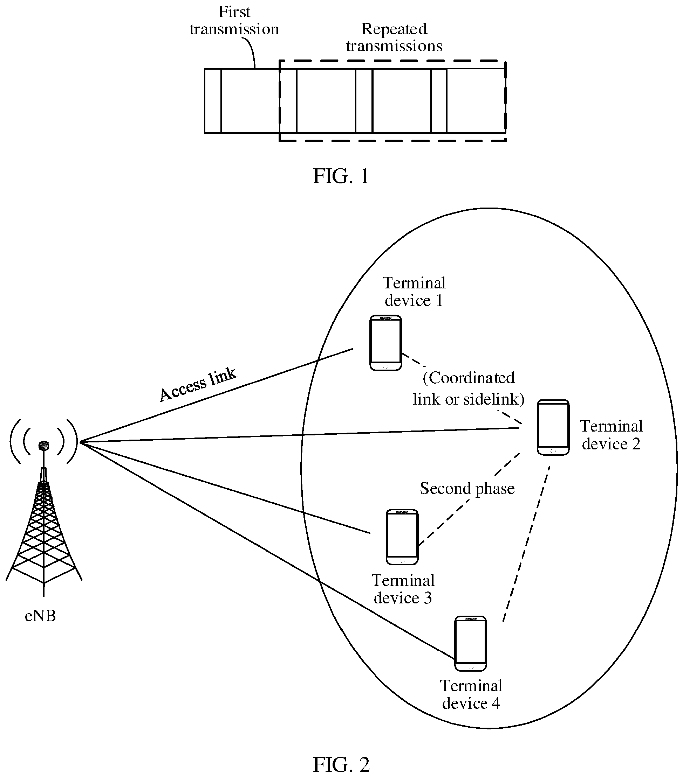

Ultra-reliable and low latency communications (Ultra-Reliable and Low Latency Communications, URLLC for short) is a most important application scenario of a 5G mobile communications system. Low latency and high stability are two most important features of the URLLC. A requirement of the URLLC for stability is 1 to 10⁻⁵, increased a lot compared with 1 to 10⁻² of LTE. In some application scenarios, a requirement for an end-to-end latency is even less than 1 ms. If URLLC transmission is performed by using a traditional long term evolution (Long Term Evolution, LTE for short), a requirement of a URLLC service cannot be satisfied. Therefore, a currently commonly used solution is transmitting downlink URLLC data a plurality of consecutive times. As shown in FIG. 1, the method can increase a probability of receiving the downlink URLLC data by an edge device (for example, a transmit end sends data of a same version or data of different retransmission versions a plurality of times, so that a receive end can be enabled to perform a combined process, to increase the correctly receiving probability), and can further reduce a related latency brought by an application hybrid automatic repeat request (Hybrid Automatic Repeat Request, HARQ for short) scheme by relying on the plurality of transmissions without requiring an acknowledgement (Acknowledgement, ACK for short) or negative acknowledge (Acknowledgement, NACK for short) feedback, thereby satisfying a latency requirement of the URLLC scenario.

However, in a time division duplex (Time Division Duplex, TDD for short) mode, because a base station has completed an uplink and downlink configuration in advance, to be specific, a terminal device performs downlink receiving and uplink sending based on a ratio of an uplink slot to a downlink slot that has been configured by a network side device. If the network side device sends the downlink URLLC data at the last downlink position (DL slot) of the uplink and downlink configuration, the network side device has only one DL slot for sending the downlink URLLC data, and has no additional DL slot for transmitting the downlink URLLC data a plurality of consecutive times. Therefore, in this scenario, the solution in the prior art cannot improve the probability of receiving the URLLC data by the terminal device.

WO 2017/026970 A1 describes methods and apparatus for enabling high data rate relay operation using a device-to-device air interface including a User Equipment for transmitting and receiving data via a sidelink interface under control of an Evolved Node B.

### SUMMARY

The present invention provides a data transmission method, an access network device, and a system according to the independent claims, to resolve a technical problem in the prior art that when there is no additional DL slot for transmitting downlink URLLC data a plurality of consecutive times, a probability of correctly receiving the URLLC data by the terminal device cannot be increased. The following aspects are to be considered to be embodiments of the present invention if they fall within the scope of one of the independent claims.

According to a first aspect, this application provides a data transmission method for ultra-reliable and low latency communications, URLLC, transmission in a 5G communications system, including:
sending, by an access network device, first control information to a first terminal device, where the first control information is used to instruct the first terminal device to transmit downlink data received from the access network device, to a second terminal device a plurality of times through a sidelink (Sidelink, SL for short); and
sending, by the access network device, the downlink data to the first terminal device.

In the method provided in the first aspect, the access network device sends the first control information to the first terminal device, so that the first terminal device transmits the downlink data received from the access network device, to the second terminal device the plurality of times through the sidelink based on the first control information, thereby increasing a probability of correctly receiving the downlink data by the second terminal device, and the plurality of transmissions through the sidelink is not limited to being affected by an uplink and downlink configuration of the access network device. When the downlink data is downlink URLLC data, the method in this application further improves reliability of the URLLC data and ensures a low latency requirement of a data transmission in a URLLC scenario.

The first control information includes a coordinated transmission instruction, first resource information, and second resource information; and
the coordinated transmission instruction is used to instruct the first terminal device to transmit the downlink data received by the first terminal device based on the first resource information, to the second terminal device the plurality of times through the sidelink based on the second resource information. The method further includes: forming, by the access network device, the second resource information based on a to-be-cancelled uplink scheduling resource, or forming, by the access network device, the second resource information based on a new uplink resource allocated by the access network device for the second terminal device, where the new uplink resource is different from an uplink resource that has been scheduled by the access network device.

In the method provided in this possible design, the first terminal device may obtain, by using the definite coordinated transmission instruction, whether coordinated transmission (to be specific, transmitting the data to the second terminal device through the sidelink the plurality of times) needs to be performed by the first terminal device, and a resource used for the coordinated transmission is clarified, ensuring accuracy of the coordinated transmission performed by the first terminal device.

According to a third aspect, this application provides an access network device, including units or means (means) configured to perform the steps in the first aspect.

Compared with the prior art, the access network device sends the first control information to the first terminal device, so that the first terminal device transmits the downlink data received from the access network device, to the second terminal device the plurality of times through the sidelink based on the first control information, thereby increasing the probability of correctly receiving the downlink data by the second terminal device, and the plurality of transmissions through the sidelink is not limited to being affected by the uplink and downlink configuration of the access network device. When the downlink data is downlink URLLC data, the method in this application further improves the reliability of the URLLC data and ensures the low latency requirement of the data transmission in the URLLC scenario.

### BRIEF DESCRIPTION OF DRAWINGS

FIG.1 is a schematic diagram of transmitting downlink URLLC data a plurality of consecutive times in the prior art;
FIG. 2 is a schematic architectural diagram of a communications system according to this application;
FIG. 3 is a signaling flowchart of a data transmission method;
FIG. 4 is a schematic diagram of an uplink and downlink configuration according to this application;
FIG. 5 is a signaling flowchart of Embodiment 2 of a data transmission method according to this application;
FIG. 6 is a schematic structural diagram of an access network device according to this application;
FIG. 7 is a schematic structural diagram of a terminal device according to this application;
FIG. 8 is a schematic structural diagram of Embodiment 2 of an access network device according to this application; and
FIG. 9 is a schematic structural diagram of Embodiment 2 of a terminal device according to the embodiment 2 of this application.

### DESCRIPTION OF EMBODIMENTS

A data transmission method provided in this application may be applicable to a schematic architectural diagram of a communications system shown in FIG. 2. As shown in FIG. 2, the communications system includes an access network device and a plurality of terminal devices. It is assumed that the plurality of terminal devices includes a terminal device 1, a terminal device 2, a terminal device 3, and a terminal device 4 shown in FIG. 2. It should be noted that the communications system shown in FIG. 2 may be applicable to different network standards, for example, may be applicable to network standards such as a global system for mobile communications (Global System for Mobile communications, GSM for short), code division multiple access (Code Division Multiple Access, CDMA for short), wideband code division multiple access (Wideband Code Division Multiple Access, WCDMA for short), time division-synchronous code division multiple access (Time Division-Synchronous Code Division Multiple Access, TD-SCDMA for short), a long term evolution (Long Term Evolution, LTE for short) system, and future 5G. Optionally, the communications system may be a system in a scenario of an ultra-reliable and low latency communications (Ultra-Reliable and Low Latency Communications, URLLC) transmission in a 5G communications system.

Therefore, optionally, a base station may be a base transceiver station (Base Transceiver Station, BTS for short) and/or a base station controller in the GSM or the CDMA, a NodeB (NodeB, NB for short) and/or a radio network controller (Radio Network Controller, RNC for short) in the WCDMA, an evolved NodeB (Evolved Node B, eNB or eNodeB for short), a relay node, or an access point in the LTE, or a gNB (gNB) in a 5G network. This is not limited in this application.

The terminal device may be a wireless terminal or a wired terminal. The wireless terminal may refer to a device that provides a user with voice and/or another service data connectivity, a handheld device with a wireless connection function, or another processing device connected to a wireless modem. The wireless terminal may communicate with one or more core network devices through a radio access network (Radio Access Network, RAN for short). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For another example, the wireless terminal may alternatively be a device such as a personal communication service (Personal Communication Service, PCS for short) phone, a cordless telephone set, a session initiation protocol (Session Initiation Protocol, SIP for short) phone, a wireless local loop (Wireless Local Loop, WLL for short) station, or a personal digital assistant (Personal Digital Assistant, PDA for short). The wireless terminal may alternatively be referred to as a system, a subscriber unit (Subscriber Unit), a subscriber station (Subscriber Station), a mobile station (Mobile Station), a mobile station (Mobile), a remote station (Remote Station), a remote terminal (Remote Terminal), an access terminal (Access Terminal), a user terminal (User Terminal), a user agent (User Agent), or a user device (User Device or User Equipment). This application is not limited thereto. Optionally, the terminal device may alternatively be a device such as a smartwatch or a tablet.

During specific communication, the access network device transmits downlink data to the terminal device, where the downlink data is coded through channel coding, and the data obtained after the channel coding is transmitted to the terminal device after constellation modulation; and the terminal device sends uplink data to the access network device, where the uplink data may also be coded through the channel coding, and the data obtained after the coding is transmitted to the base station after the constellation modulation. The plurality of terminal devices may collaborate to communicate with each other.

It should be noted that in the communications system shown in FIG. 2, because some terminal devices are located at an edge of a network coverage area, interference of an ambient environment on a network service is relatively large, and other factors, network quality of service of the terminal devices is relatively poor. For example, the terminal device 2 in FIG. 2 is located at an edge of the network coverage with poorer network quality, and the terminal device 1 is located at a center of the network coverage with better network quality.

Based on the foregoing mentioned URLLC scenario in 5G, low latency and high stability are two most important features of the URLLC. A requirement of the URLLC for stability is 1 to 10⁻⁵, increased a lot compared with 1 to 10⁻² of the LTE. In some application scenarios, a requirement for an end-to-end latency is even less than 1 ms. To make the terminal device 2 still satisfy the requirements for receiving stability and low latency in a case in which the network quality is relatively poor, in the prior art, a solution of transmitting downlink URLLC data a plurality of consecutive times is used. As shown in FIG. 1, the method can increase a probability of receiving the downlink URLLC data by the terminal device 2, and can further reduce a related latency brought by an application HARQ mode by relying on the plurality of transmissions without requiring an acknowledgement ACK or NACK feedback, thereby satisfying the latency requirement of the URLLC scenario. However, when the solution is in a TDD mode, if the access network device sends the downlink URLLC data at the last downlink position (DL slot) of an uplink and downlink configuration, a network side device has only one DL slot for sending the downlink URLLC data, and there is no additional DL slot for transmitting the downlink URLLC data the plurality of consecutive times. Therefore, in this scenario, the solution in the prior art cannot improve the probability of correctly receiving the URLLC data by the terminal device 2. In addition, it should be noted that the "last downlink position (DL slot)" described above refers to the last downlink slot before a downlink is converted to an uplink, namely, the last downlink slot before a special slot, in the uplink and downlink configuration.

The data transmission method provided in this application aims to resolve the foregoing technical problems in the prior art.

The following describes the technical solutions of this application and how the technical solutions of this application resolve the technical problems in detail by using specific embodiments. The following several specific embodiments may be combined with each other, and a same or similar concept or process may be not described repeatedly in some embodiments. The following describes the embodiments of this application with reference to accompanying drawings.

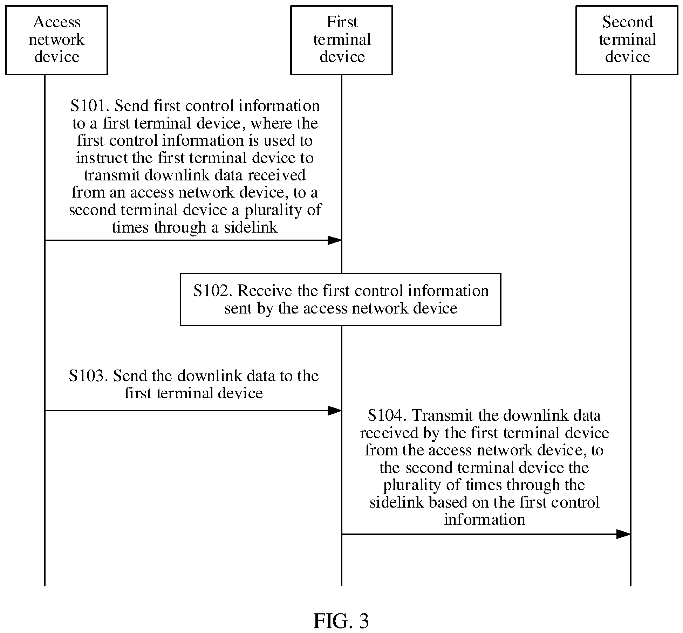

The following paragraphs describe embodiments, aspects and examples that are not specifically claimed but may be useful for understanding the invention. FIG. 3 is a signaling flowchart of Embodiment 1 of a data transmission method according to this application. This embodiment relates to a specific process in which a first terminal device sends downlink data received from an access network device, to a second terminal device in an device-to-device (Device-to-Device, D2D for short) manner a plurality of times, thereby increasing a probability of correctly receiving the downlink data by the second terminal device. The first terminal device and the second terminal device are described before the specific embodiments are described.

Referring to FIG. 2, it is assumed that the first terminal device is the terminal device 1 and the second terminal device is the terminal device 2. The first terminal device and the second terminal device may constitute a cooperation group. The access network device may configure the first terminal device and the second terminal device to form a cooperation group, or the first terminal device and the second terminal device may form a cooperation group by negotiating with each other through D2D communication interaction between the first terminal device and the second terminal device. Optionally, for the cooperation group, each of different cooperation groups in a cell corresponds to one cooperation group identifier, and the cooperation group identifier may be configured by the access network device and is notified to all members in the cooperation group. The access network device may multicast one piece of downlink data by using the cooperation group identifier, and a final destination address of the downlink data is the second terminal device. To be specific, the second terminal device is a target user of the downlink data. The following method embodiment mainly relates to a case in which the first terminal device transmits, after receiving the downlink data, the downlink data to the second terminal device through a sidelink a plurality of times, thereby greatly increasing a probability of correctly decoding the data by the second terminal device.

It should be noted that the access network device may or may not configure the cooperation group identifier for the cooperation group. This is not limited in this embodiment.

As shown in FIG. 3, the method includes the following steps.

S 101. The access network device sends first control information to the first terminal device, where the first control information is used to instruct the first terminal device to transmit downlink data received from the access network device, to the second terminal device a plurality of times through the sidelink.

Specifically, when the downlink data arrives at the access network device, the access network device needs to send the downlink data to the first terminal device. Before sending the downlink data, the access network device needs to send the first control information to the first terminal device, where the first control information is used to instruct the first terminal device to transmit the downlink data received from the access network device, to the second terminal device the plurality of times through the sidelink. Optionally, the first control information may include information used to indicate a resource used by the first terminal device to receive the downlink data, and may further include information used to indicate a resource used by the first terminal device to transmit the downlink data to the second terminal device through the sidelink. A form of the first control information is not limited in this embodiment of this application.

Optionally, the downlink data sent by the access network device may be downlink URLLC data.

S 102. The first terminal device receives the first control information sent by the access network device.

S103. The access network device sends the downlink data to the first terminal device.

S 104. The first terminal device transmits, the downlink data received by the first terminal device from the access network device, to the second terminal device a plurality of times through the sidelink based on the first control information.

Specifically, after receiving the downlink data sent by the access network device, the first terminal device transmits the received downlink data to the second terminal device a plurality of times through the sidelink based on the first control information. Optionally, "the plurality of transmissions" herein may be that the first terminal device transmits downlink data of a same retransmission version to the second terminal device every time, and may alternatively be that the first terminal device transmits downlink data of a different retransmission version to the second terminal device every time, so that the second terminal device can perform a combined process. Based on this, the second terminal device may receive the downlink data transmitted by the first terminal device through the sidelink the plurality of times, thereby improving a probability of correctly decoding the downlink data by the second terminal device. It should be noted that the downlink data mentioned in this application is data sent by the access network device to the terminal device; uplink data is data sent by the terminal device to the access network device; and sidelink data is data sent by the terminal device to the terminal device. The data transmitted by the first terminal device to the second terminal device through the sidelink in this embodiment of this application may actually be referred to as the sidelink data, and content of the sidelink data is essentially content of the downlink data received by the first terminal device from the access network device.

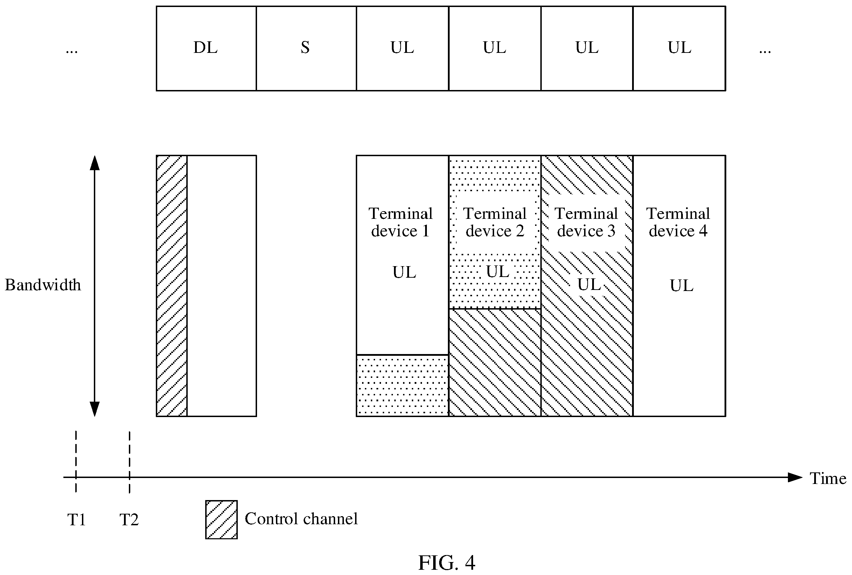

In a TDD mode, for an uplink and downlink configuration scenario shown in FIG. 4: At a moment T1, the access network device determines, based on a service requirement and a scheduling request of the terminal device, a specific uplink and downlink configuration to be used. For example, referring to an uplink and downlink configuration shown in FIG. 4, it is assumed that the access network device allocates the last DL slot for a downlink transmission of the second terminal device, and it is assumed that four consecutive UL slots after the last DL slot are respectively used for uplink transmissions of the first terminal device (namely, the terminal device 1 in FIG. 2), the second terminal device (namely, the terminal device 2 in FIG. 2), a terminal device 3, and a terminal device 4. Optionally, the access network device may schedule any of the terminal devices to perform uplink transmission on the four UL slots, and the terminal device 1, the terminal device 2, the terminal device 3, and the terminal device 4 are merely an example. The access network device may schedule any of the terminal devices to perform uplink transmission on the UL slots.

Continuing to refer to FIG. 4, at a moment T2 (after the moment T1 and before the last DL slot), the downlink data arrives at the access network device. Because the access network device has only the last DL slot left, DL URLLC data cannot be sent to the second terminal device a plurality of times by using a multi-transmission mechanism of a DL URLLC transmission in the prior art, and consequently, a probability of correctly receiving the downlink data by a second terminal device cannot be improved. However, in this application, after receiving the downlink data sent by the access network device, the first terminal device transmits the downlink data to the second terminal device the plurality of times through the sidelink based on the first control information sent by the access network device. The plurality of transmissions herein may use resources of subsequent several UL slots shown in FIG. 4, and when the sidelink data is transmitted, some or all of the resources of the UL slots may be used. Alternatively, the downlink data may be transmitted to the second terminal device through the sidelink the plurality of times by using a new uplink resource that is specially allocated by the access network device for a D2D transmission. In this case, when the sidelink data is transmitted, a part or all of the new uplink resource may be used.

It can be learned from the foregoing descriptions that the data transmission method provided in this application can increase the probability of correctly receiving and decoding the downlink data by the second terminal device in the uplink and downlink configuration scenario shown in FIG. 4. When the downlink data is the downlink URLLC data, the method in this application further improves reliability of the URLLC data and ensures a low latency requirement of a data transmission in a URLLC scenario.

In addition, it should be noted that this embodiment of this application is not only applicable to the scenario, as shown in FIG.4, in which the access network device sends the downlink data at the last downlink slot after the downlink data arrives, and may further be applicable to the following scenario: The access network device may send the downlink data at any DL slot after the downlink data arrives at the access network device, for example, send the downlink data at the last second downlink slot before a special slot, send the downlink data at the last third downlink slot before a special slot, or the like. To be specific, when a quantity of downlink slots or resources corresponding to the downlink slots for sending the downlink data the plurality of times cannot satisfy stability and reliability requirements of the downlink data, the access network device may transmit the downlink data through the sidelink between the first terminal device and the second terminal device the plurality of times by using the solution in this application, to improve the probability of correctly receiving the downlink data by the second terminal device.

In addition, when the quantity of downlink slots or the resources corresponding to the downlink slots for sending the downlink data the plurality of times by the access network device can satisfy the stability and reliability requirements of the downlink data, the access network device may also send the downlink data to the second terminal device through the sidelink the plurality of times by using the first terminal device while transmitting the downlink data to the second terminal device the plurality of times by using the plurality of downlink slots. In the following sending the downlink data a plurality of times, for the downlink data sent by the access network device to the second terminal device the plurality of times and the downlink data sent by the first terminal device to the second terminal device through the sidelink the plurality of times, same sending configuration information and a same time-frequency resource position are used, avoiding generating data interference. This solution is equivalent to that the first terminal device assists the access network device in performing downlink transmission a plurality of times through the plurality of times of sending through the sidelink, and the probability of correctly receiving the downlink data by the second terminal device is further improved by using this solution.

In the data transmission method provided in this application, the access network device sends the first control information to the first terminal device, so that the first terminal device transmits the downlink data received from the access network device, to the second terminal device the plurality of times through the sidelink based on the first control information, thereby increasing the probability of correctly receiving the downlink data by the second terminal device, and the plurality of transmissions through the sidelink is not limited to being affected by an uplink and downlink configuration of the access network device. When the downlink data is the downlink URLLC data, the method in this application further improves reliability of the URLLC data and ensures the low latency requirement of the data transmission in the URLLC scenario.

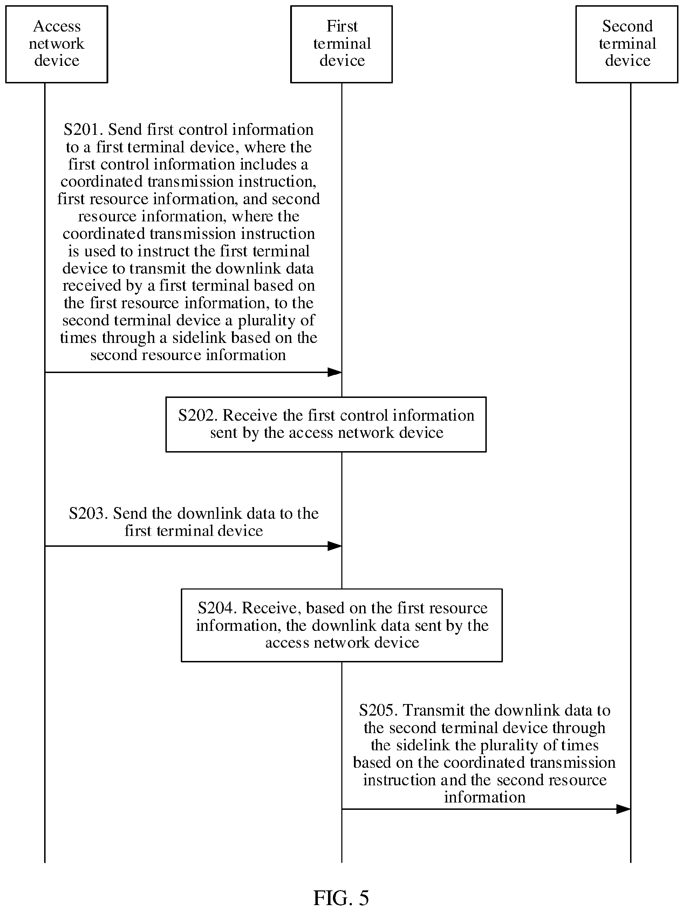

The following is related to a claimed embodiment. FIG. 5 is a signaling flowchart of Embodiment 2 of a data transmission method according to this application. This embodiment relates to a specific process of how a first terminal device receives downlink data based on first control information and how the first terminal device transmits the downlink data to a second terminal device based on the first control information a plurality of times.

As shown in FIG. 5, the method may specifically include the following steps.

S201. An access network device sends the first control information to the first terminal device, where the first control information includes a coordinated transmission instruction, first resource information, and second resource information; and the coordinated transmission instruction is used to instruct the first terminal device to transmit the downlink data received by the first terminal device based on the first resource information, to the second terminal device the plurality of times through the sidelink based on the second resource information.

S202. The first terminal device receives the first control information sent by the access network device.

Specifically, as described in the foregoing embodiment, the first terminal device and the second terminal device constitute a cooperation group. In this embodiment, the cooperation group may be referred to as a terminal device group. Optionally, the access network device may or may not allocate a group identifier for the terminal device group.

After the access network device allocates the group identifier for the terminal device group, the group identifier may be a user equipment cooperation group-radio network temporary identity (UE Cooperation Group-Radio Network Temporary Identity, UCG-RNTI for short), and may alternatively be an identifier of another format. This is not limited in this embodiment. When the access network device needs to deliver the first control information, the access network device may bind the group identifier of the terminal device group with downlink control information (Downlink Control Information, DCI for short), to form first control information and then deliver the first control information to the first terminal device. Optionally, the term "bind" herein may be scrambling the DCI by using the group identifier of the terminal device group. To be specific, the first control information is the DCI scrambled by the access network device by using the group identifier of the terminal device group, and the DCI may be represented as a DCI format X. When the first terminal device belonging to the terminal device group detects that the identifier of the terminal device group exists in the first control information, the first terminal device receives the first control information, further parses the first control information, and obtains the coordinated transmission instruction, the first resource information, and the second resource information in the first control information.

When the access network device does not allocate the group identifier for the terminal device group and the access network device needs to deliver the first control information, the access network device may bind an identifier of a target user (namely, the second terminal device) of the terminal device group with the DCI, to form the first control information and then deliver the first control information to the first terminal device. Optionally, the term "bind" herein may be scrambling (Scrambling) the DCI by using the identifier of the second terminal device. To be specific, the first control information is the DCI scrambled by the access network device by using the identifier of the second terminal device. When the first terminal device belonging to the terminal device group detects that the identifier of the second terminal device exists in the first control information, the first terminal device receives the first control information, further parses the first control information, and obtains the coordinated transmission instruction, the first resource information, and the second resource information in the first control information.

Optionally, the second resource information may include first time-frequency resource configuration information and first transmission configuration information that are used when the first terminal device sends the downlink data to the second terminal device the plurality of times. The first transmission configuration information may include at least one of a modulation and coding scheme (Modulation and Coding Scheme, MCS for short) parameter, antenna configuration information, a quantity of transmissions, and version number-related information for a data retransmission that are used when the first terminal device sends the downlink data to the second terminal device.

Optionally, the first resource information may include second time-frequency resource configuration information and second transmission configuration information that are used when the first terminal device receives the downlink data; where the second transmission configuration information may include at least one of a modulation and coding scheme MCS parameter and antenna configuration information that are used when the first terminal device receives the downlink data.

S203. The access network device sends the downlink data to the first terminal device.

S204. The first terminal device receives, based on the first resource information, the downlink data sent by the access network device.

S205. The first terminal device transmits the downlink data to the second terminal device through the sidelink the plurality of times based on the coordinated transmission instruction and the second resource information.

Specifically, after the first terminal device parses and obtains the coordinated transmission instruction, the first resource information, and the second resource information in the first control information, the first terminal device is aware, by using the coordinated transmission instruction, that the first terminal device needs to transmit the received downlink data to the second terminal device through the sidelink the plurality of times.

Therefore, after the access network device sends the downlink data to the first terminal device, the first terminal device may receive the downlink data based on content of the first resource information at a corresponding time-frequency resource position, and then transmit the received downlink data to the second terminal device the plurality of times through the sidelink based on the coordinated transmission instruction and content of the second resource information.

The access network device forms the second resource information based on a new uplink resource allocated by the access network device for the second terminal device, and the new uplink resource is different from an uplink resource that has been scheduled by the access network device. To be specific, a time-frequency resource indicated by the first time-frequency resource configuration information in the second resource information may be a new uplink resource allocated by the access network device, and the first terminal device may send the downlink data to the second terminal device through the sidelink the plurality of times by using the new uplink resource. In the optional method, because the access network device allocates the new uplink resource for the transmission through the sidelink, the access network device does not need to cancel uplink scheduling of another terminal device.

The access network device alternatively forms the second resource information based on a to-be-cancelled uplink scheduling resource. To be specific, after the access network device cancels the to-be-cancelled uplink scheduling resource, a part or all of the cancelled uplink scheduling resource is used for the transmission through the sidelink between the first terminal device and the second terminal device. Optionally, after the access network device cancels uplink scheduling resources of some (one or more) terminal devices covered by the access network device, the access network device may send the second control information to the terminal devices covered by the access network device. The second control information carries an uplink scheduling cancellation instruction, to notify the terminal devices that the access network device has cancelled the uplink scheduling resources of the terminal devices. It should be noted that when the first terminal device sends sidelink data to the second terminal device, because the access network device has used an uplink resource to schedule a terminal for performing uplink transmission, at least a part of the uplink scheduling resource needs to be cancelled and used as a sidelink scheduling resource for sidelink communication between the first terminal device and the second terminal device, and the at least a part of the uplink scheduling resource that needs to be cancelled is referred to as the "to-be-cancelled uplink scheduling resource" in this application.

Optionally, when the access network device allocates the group identifier for the terminal device group in which the first terminal device and the second terminal device are located, if the access network device cancels an uplink scheduling resource of a member in the terminal device group, the access network device may bind the group identifier of the terminal device group with DCI (the DCI may be represented as a DCI format Y, and the DCI format Y is different from the DCI format X), to form the second control information and then deliver the second control information. Optionally, the term "bind" herein may be scrambling the DCI format Y by using the group identifier of the terminal device group. To be specific, the second control information is the DCI scrambled by the access network device by using the group identifier of the terminal device group. When the member of the terminal device group detects that the identifier of the terminal device group exists in the second control information, the member of the terminal device group receives the second control information, further parses the second control information, and obtains the uplink scheduling cancellation instruction. It should be noted that when the second control information is scrambled by using the group identifier of the terminal device group, only the member in the terminal device group can receive the second control information, and further learns that the access network device cancels the uplink scheduling resource of the member in the terminal device group.

Optionally, when the access network device does not allocate the group identifier for the terminal device group in which the first terminal device and the second terminal device are located, if the access network device cancels uplink scheduling resources of some terminal devices, the access network device may bind an identifier of each terminal device in the some terminal devices with the DCI format Y, to obtain a plurality of pieces of second control information and send the plurality of pieces of second control information to the terminal device covered by the access network device. When the terminal device detects that the second control information carries an identifier of the terminal device, the terminal device receives the second control information and parses the second control information, so that the terminal device learns that the access network device cancels the uplink scheduling resource of the terminal device according to an uplink scheduling cancellation instruction in the second control information. Optionally, the identifier of the terminal device may be a radio network temporary identity (Radio Network Temporary Identity, RNTI for short) of the terminal device. To be specific, an identifier of a terminal device that the access network device adds to the delivered one or more pieces of second control information indicates that an uplink scheduling resource of the terminal device is cancelled by the access network device.

It should be noted that the some terminal devices covered by the access network device may be the first terminal device, all the terminal devices in the terminal device group, or may be a terminal device in a non-terminal device group. That the access network device sends the second control information may specifically include two cases.

In a first case, assuming that the access network device performs uplink scheduling for only the first terminal device (to be specific, allocates an uplink scheduling resource for only the first terminal device and allocate no uplink scheduling resource for another terminal device), the first terminal device is used as a device for assisting the second terminal device in improving a probability of correctly receiving the downlink data (to be specific, the first terminal device may be considered as a cooperation user). After receiving the downlink data based on the first resource information, the first terminal device learns that the first terminal device is a user assisting the second terminal device. When the uplink scheduling resource of the first terminal device is sufficient for performing transmission a plurality of times, the first terminal device may transmit the downlink data to the second terminal device through the sidelink the plurality of times by directly using the uplink scheduling resource of the first terminal device. In this case, the access network device does not need to send the second control information to the first terminal device.

In a second case, referring to FIG. 2, assuming that the access network device not only performs uplink scheduling for the first terminal device (a terminal device 1), but also performs uplink scheduling for the second terminal device (a terminal device 2) and a terminal device 3, the first terminal device is used as a device for assisting the second terminal device in improving a probability of correctly receiving the downlink data (to be specific, the first terminal device may be considered as a cooperation user). After receiving the downlink data based on the first resource information, the first terminal device learns that the first terminal device is a user assisting the second terminal device. When an uplink scheduling resource of the first terminal device is insufficient for performing transmission a plurality of times, the access network device needs to cancel uplink scheduling resources of the terminal device 2 and the terminal device 3, then combines the uplink scheduling resources of the terminal device 1, the terminal device 2, and the terminal device 3 together, to form a total uplink scheduling resource, and then uses a part or all of the total uplink scheduling resource as a resource for a sidelink transmission. In this case, the access network device needs to separately send the second control information to the terminal device 2 and the terminal device 3, to notify the terminal device 2 and the terminal device 3 that the access network device cancels the uplink scheduling resources of the terminal device 2 and the terminal device 3. Optionally, the second control information sent to the terminal device 2 may be a DCI format Y scrambled by using the group identifier of the terminal device group, or may be a DCI format Y scrambled by using an identifier of the terminal device. The second control information sent to the terminal device 3 may be a DCI format Y scrambled by using an identifier of the terminal device 3.

It can be learned from the foregoing descriptions that, the access network device may form the second resource information by allocating the new uplink resource for the data transmission through the sidelink, to assist the first terminal device in transmitting the received downlink data to the second terminal device the plurality of times. The access network device may alternatively cancel an uplink scheduling resource that has been scheduled and that is of the terminal device, and use the cancelled uplink scheduling resource as a resource of the data transmission through the sidelink, to assist the first terminal device in transmitting the received downlink data to the second terminal device the plurality of times. Therefore, the method provided in this application can be not limited to being affected by an uplink and downlink configuration used by the access network device, and can increase the probability of correctly receiving the downlink data by the second terminal device, improve network quality of service of the second terminal device, and ensure stability and reliability of the data transmission.

In addition, it should be noted that the cancelled uplink scheduling resource in this embodiment of this application may be not only used for a sidelink transmission, but may also be used for a downlink transmission.

To describe this application more clearly, the following describes a specific process in this embodiment of this application by using a simple example.

In this example, assuming that the access network device performs uplink scheduling for the terminal device 1, the terminal device 2, and the terminal device 3, the terminal device 1 and the terminal device 2 constitute a terminal device group, and the access network device allocates the group identifier for the terminal device group. With reference to the uplink and downlink configuration scenario shown in FIG. 4, three slots after a special slot are all uplink slots (UL slot). The downlink data arrives at the access network device before the last downlink slot (DL slot) (namely, a moment T1 in FIG. 4) before the special slot (S), and the access network device sends the downlink data on the last DL slot. Before sending the downlink data, the access network device needs to send the first control information to the first terminal device, where the first control information includes a coordinated transmission instruction, first resource information, and second resource information. The terminal device 2 is a user with poor network quality of service and is referred to as a target user. The terminal device 1 is a user with good network quality of service, and is referred to as a cooperation user.

When detecting that the group identifier of the terminal device group or the identifier of the terminal device 2 exists in the first control information, the terminal device 1 determines to receive the first control information, and then obtains the coordinated transmission instruction, the first resource information, and the second resource information in the first control information. The terminal device 1 receives, by using the first resource information, the downlink data sent by the access network device, and learns, according to the coordinated transmission instruction, that the terminal device 1 needs to transmit the received downlink data to the terminal device 2 a plurality of times. Then the terminal device 1 transmits, by using content indicated by the second resource information, the downlink data to the terminal device 2 through the sidelink the plurality of times at a specified time-frequency resource position based on specified transmission configuration information. In addition, because the terminal device 1 learns that the terminal device 1 needs to perform sidelink transmission, the terminal device 1 does not perform sending on a corresponding uplink scheduling resource, so that the terminal device 1 may perform sidelink transmission or D2D transmission by using the uplink scheduling resource. A time-frequency resource indicated by the first time-frequency resource configuration information in the second resource information includes the uplink scheduling resource of the terminal device 1.

When detecting that the group identifier of the terminal device group or the identifier of the terminal device 2 exists in the first control information, the terminal device 2 determines to receive the first control information, and then obtains the coordinated transmission instruction, the first resource information, and the second resource information in the first control information. The terminal device 2 learns, according to the coordinated transmission instruction, that the terminal device 1 needs to transmit the downlink data to the terminal device 2 the plurality of times, and then the terminal device 2 receives, based on the content of the second resource information, the downlink data the plurality of times at the specified time-frequency resource position based on the specified transmission configuration information. In addition, the terminal device 2 may further receive the second control information by detecting the identifier of the terminal device 2 or the identifier of the terminal device group, and learns, according to an uplink scheduling cancellation instruction in the second control information, that the access network device has cancelled the uplink scheduling for the terminal device 2. The terminal device 2 does not perform uplink sending on the uplink scheduling resource any more. The time-frequency resource indicated by the first time-frequency resource configuration information in the second resource information further includes the cancelled uplink scheduling resource of the terminal device 2.

Similarly, because the first control information is not bound with the identifier of the terminal device 3, the terminal device 3 does not need to receive the first control information. However, because the access network device cancels the uplink scheduling resource of the terminal device 3, the terminal device 3 determines, by detecting the identifier of the terminal device 3, to receive the second control information bound with the identifier of the terminal device 3, and then the terminal device 3 learns, according to the uplink scheduling cancellation instruction in the second control information, that the access network device has cancelled the uplink scheduling for the terminal device 3. The terminal device 3 does not perform uplink sending on the cancelled uplink scheduling resource any more. Therefore, the time-frequency resource indicated by the first time-frequency resource configuration information in the second resource information may further include the cancelled uplink scheduling resource of the terminal device 3.

Based on this, the access network device prepares the uplink scheduling resources of the terminal device 1, the terminal device 2, and the terminal device 3 for a sidelink transmission, then the terminal device 1 may transmit, by using the uplink scheduling resources, the downlink data to the second terminal device through the sidelink the plurality of times, greatly increasing the probability of correctly receiving the downlink data by the second terminal device. In addition, this application is not limited to being affected by the uplink and downlink configuration used by the access network device, ensuring the stability and the reliability of the data transmission.

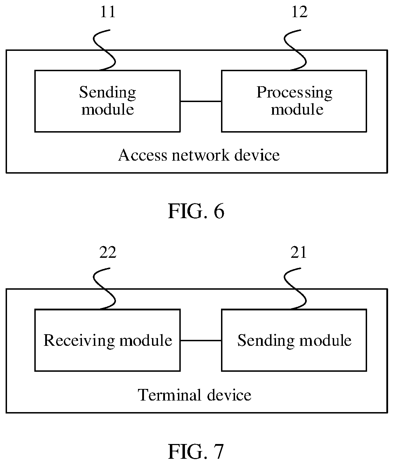

The following paragraphs describe embodiments, aspects and examples that are not specifically claimed but may be useful for understanding the invention. FIG. 6 is a schematic structural diagram of Embodiment 1 of an access network device according to this application. As shown in FIG. 6, the access network device includes a sending module 11 and a processing module 12.

Specifically, the sending module 11 is configured to send first control information to a first terminal device and send downlink data to the first terminal device, where the first control information is used to instruct the first terminal device to transmit the downlink data received from the access network device, to a second terminal device a plurality of times through a sidelink.

Optionally, the first control information includes a coordinated transmission instruction, first resource information, and second resource information; and
the coordinated transmission instruction is used to instruct the first terminal device to transmit the downlink data received by the first terminal device based on the first resource information, to the second terminal device the plurality of times through the sidelink based on the second resource information.

Optionally, the processing module 12 is configured to form the second resource information based on a to-be-cancelled uplink scheduling resource.

Optionally, the sending module 11 is further configured to send second control information to a terminal device in a coverage area of the access network device, where the second control information carries an uplink scheduling cancellation instruction, and the uplink scheduling cancellation instruction is used to instruct the access network device to cancel the uplink scheduling resource of the terminal device.

Optionally, the processing module 12 may alternatively be configured to form the second resource information based on a new uplink resource allocated by the access network device for the second terminal device, and the new uplink resource is different from an uplink resource that has been scheduled by the access network device.

Further, the first control information is downlink control information DCI scrambled by the access network device by using a group identifier of a terminal device group or an identifier of the second terminal device; and the terminal device group includes the first terminal device and the second terminal device.

Further, the second control information is downlink control information DCI scrambled by the access network device by using a group identifier of a terminal device group or an identifier of the terminal device; and the terminal device group includes the first terminal device and the second terminal device.

Optionally, the second resource information includes first time-frequency resource configuration information and first transmission configuration information that are used when the first terminal device sends the downlink data to the second terminal device the plurality of times; and
the first transmission configuration information includes at least one of a modulation and coding scheme MCS parameter, antenna configuration information, a quantity of transmissions, and version number-related information for a data retransmission that are used when the first terminal device sends the downlink data to the second terminal device.

Optionally, the first resource information includes second time-frequency resource configuration information and second transmission configuration information that are used when the first terminal device receives the downlink data; and
the second transmission configuration information includes at least one of a modulation and coding scheme MCS parameter and antenna configuration information that are used when the first terminal device receives the downlink data.

The access network device provided in this application may perform the foregoing method embodiment. Their implementation principles and technical effects are similar, and details are not described herein again.

FIG. 7 is a schematic structural diagram of Embodiment 1 of a terminal device according to this application; The terminal device may be the first terminal device in the method embodiment. As shown in FIG. 7, the first terminal device includes a receiving module 22 and a sending module 21.

Specifically, the receiving module 22 is configured to receive first control information sent by an access network device; and
the sending module 21 is configured to transmit downlink data received by the receiving module 22 from the access network device, to a second terminal device a plurality of times through a sidelink based on the first control information.

Optionally, the first control information includes a coordinated transmission instruction, first resource information, and second resource information;
the receiving module 22 is further configured to receive, based on the first resource information, the downlink data sent by the access network device; and
the sending module 21 is specifically configured to transmit, based on the coordinated transmission instruction and the second resource information, the downlink data to the second terminal device through the sidelink the plurality of times.

Optionally, the second resource information is information formed by the access network device based on a to-be-cancelled uplink scheduling resource.

Optionally, the second resource information is information formed by the access network device based on a new uplink resource allocated by the access network device for the second terminal device, and the new uplink resource is different from an uplink resource that has been scheduled by the access network device.

Optionally, the second resource information includes first time-frequency resource configuration information and first transmission configuration information that are used when the sending module 21 sends the downlink data to the second terminal device the plurality of times; and
the first transmission configuration information includes at least one of a modulation and coding scheme MCS parameter, antenna configuration information, a quantity of transmissions, and version number-related information for a data retransmission that are used when the sending module 21 sends the downlink data to the second terminal device.

Optionally, the first resource information includes second time-frequency resource configuration information and second transmission configuration information that are used when the receiving module 22 receives the downlink data; and
the second transmission configuration information includes at least one of a modulation and coding scheme MCS related parameter and antenna configuration information that are used when the receiving module 22 receives the downlink data.

The terminal device provided in this application may perform the foregoing method embodiment, and their implementation principles and technical effects are similar, and details are not described herein again.

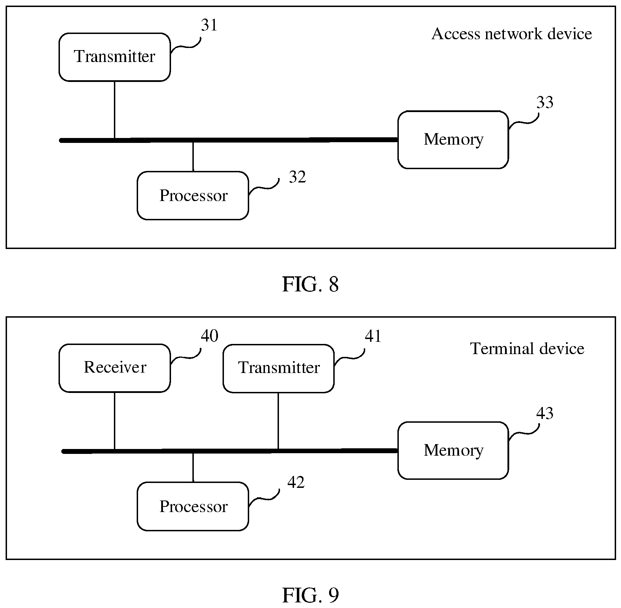

The following is related to a claimed embodiment. FIG. 8 is a schematic structural diagram of Embodiment 2 of an access network device according to this application. As shown in FIG. 8, the access network device may include a transmitter 31, a processor 32, and a memory 33. The memory 33 may include a high-speed RAM memory, and may further include a non-volatile memory NVM, for example, at least one magnetic disk storage. The memory 33 may store various programs, to complete various processing functions and implement method steps in this embodiment. Optionally, the transmitter 31 in this embodiment may be a radio frequency module or a baseband module on the access network device.

In this embodiment, the transmitter 31 is configured to send first control information to a first terminal device and send downlink data to the first terminal device, where the first control information is used to instruct the first terminal device to transmit the downlink data received from the access network device, to a second terminal device a plurality of times through a sidelink.

The first control information includes a coordinated transmission instruction, first resource information, and second resource information; and
the coordinated transmission instruction is used to instruct the first terminal device to transmit the downlink data received by the first terminal device based on the first resource information, to the second terminal device the plurality of times through the sidelink based on the second resource information.

The processor 32 is configured to form the second resource information based on a to-be-cancelled uplink scheduling resource.

Optionally, the transmitter 31 is further configured to send second control information to a terminal device in a coverage area of the access network device, where the second control information carries an uplink scheduling cancellation instruction, and the uplink scheduling cancellation instruction is used to instruct the access network device to cancel the uplink scheduling resource of the terminal device.

The processor 32 alternatively be configured to form the second resource information based on a new uplink resource allocated by the access network device for the second terminal device, and the new uplink resource is different from an uplink resource that has been scheduled by the access network device.

Further, the first control information is downlink control information DCI scrambled by the access network device by using a group identifier of a terminal device group or an identifier of the second terminal device; and the terminal device group includes the first terminal device and the second terminal device.

Further, the second control information is downlink control information DCI scrambled by the access network device by using a group identifier of a terminal device group or an identifier of the terminal device; and the terminal device group includes the first terminal device and the second terminal device.

Optionally, the second resource information includes first time-frequency resource configuration information and first transmission configuration information that are used when the first terminal device sends the downlink data to the second terminal device the plurality of times; and
the first transmission configuration information includes at least one of a modulation and coding scheme MCS parameter, antenna configuration information, a quantity of transmissions, and version number-related information for a data retransmission that are used when the first terminal device sends the downlink data to the second terminal device.

Optionally, the first resource information includes second time-frequency resource configuration information and second transmission configuration information that are used when the first terminal device receives the downlink data; and
the second transmission configuration information includes at least one of a modulation and coding scheme MCS parameter and antenna configuration information that are used when the first terminal device receives the downlink data.

The access network device provided in this application may perform the foregoing method embodiment. Their implementation principles and technical effects are similar, and details are not described herein again.

FIG. 9 is a schematic structural diagram of Embodiment 2 of a terminal device according to this application. As shown in FIG. 9, the terminal device may be the first terminal device in the method embodiment. The terminal device may include a receiver 40, a transmitter 41, a processor 42, and a memory 43. The memory 43 may include a high-speed RAM memory, and may further include a non-volatile memory NVM, for example, at least one magnetic disk storage. The memory 43 may store various programs, to complete various processing functions and implement method steps in this embodiment. Optionally, the receiver 40 and the transmitter 41 in this embodiment may be a radio frequency module or a baseband module on the terminal device. The receiver 40 and the transmitter 41 may be integrated to form a transceiver.

In this embodiment, the receiver 40 is configured to receive first control information sent by an access network device; and
the transmitter 41 is configured to transmit downlink data received by the receiver 40 from the access network device, to a second terminal device through a sidelink a plurality of times based on the first control information.

Optionally, the first control information includes a coordinated transmission instruction, first resource information, and second resource information; and
the receiver 40 is further configured to receive, based on the first resource information, the downlink data sent by the access network device; and
the transmitter 41 is specifically configured to transmit the downlink data to the second terminal device through the sidelink the plurality of times based on the coordinated transmission instruction and the second resource information.

Optionally, the second resource information is information formed by the access network device based on a to-be-cancelled uplink scheduling resource.

Optionally, the second resource information is information formed by the access network device based on a new uplink resource allocated by the access network device for the second terminal device, and the new uplink resource is different from an uplink resource that has been scheduled by the access network device.

Optionally, the second resource information includes first time-frequency resource configuration information and first transmission configuration information that are used when the transmitter 41 sends the downlink data to the second terminal device the plurality of times; and
the first transmission configuration information includes at least one of a modulation and coding scheme MCS parameter, antenna configuration information, a quantity of transmissions, and version number-related information for a data retransmission that are used when the transmitter 41 sends the downlink data to the second terminal device.

Optionally, the first resource information includes second time-frequency resource configuration information and second transmission configuration information that are used when the receiver 40 receives the downlink data; and
the second transmission configuration information includes at least one of a modulation and coding scheme MCS related parameter and antenna configuration information that are used when the receiver 40 receives the downlink data.

The terminal device provided in this application may perform the foregoing method embodiment, and their implementation principles and technical effects are similar, and details are not described herein again.

## Claims

1. A data transmission method, comprising:
sending (S201), by an access network device, first control information to a first terminal device, wherein the first control information is used to instruct the first terminal device to transmit downlink data received from the access network device, to a second terminal device a plurality of times through a sidelink; and
sending (S202), by the access network device, the downlink data to the first terminal device, wherein the first control information comprises a coordinated transmission instruction, first resource information, and second resource information; and
the coordinated transmission instruction is used to instruct the first terminal device to transmit the downlink data received by the first terminal device based on the first resource information, to the second terminal device the plurality of times through the sidelink based on the second resource information **characterized in that** the data transmission method is performed for ultra-reliable and low latency communications, URLLC, transmission in a 5G communications system, wherein the method further comprises:
forming, by the access network device, the second resource information based on a to-be-cancelled uplink scheduling resource, or
forming, by the access network device, the second resource information based on a new uplink resource allocated by the access network device for the second terminal device, wherein the new uplink resource is different from an uplink resource that has been scheduled by the access network device.

2. The data transmission method according to claim 1, further comprising:
receiving (S203), by the first terminal device, the first control information sent by the access network device; and
transmitting (S205), by the first terminal device, the downlink data received by the first terminal device from the access network device, to the second terminal device the plurality of times through the sidelink based on the first control information, wherein the transmitting, by the first terminal device, downlink data received by the first terminal device from the access network device, to the second terminal device the plurality of times through the sidelink based on the first control information specifically comprises:
receiving (S204), by the first terminal device based on the first resource information, the downlink data sent by the access network device; and
transmitting (S205), by the first terminal device based on the coordinated transmission instruction and the second resource information, the downlink data to the second terminal device through the sidelink the plurality of times.

3. An access network device, comprising:
a sending module (11), configured to send first control information to a first terminal device and send downlink data to the first terminal device, wherein
the first control information is used to instruct the first terminal device to transmit the downlink data received from the access network device, to a second terminal device a plurality of times through a sidelink, wherein the first control information comprises a coordinated transmission instruction, first resource information, and second resource information; and
the coordinated transmission instruction is used to instruct the first terminal device to transmit the downlink data received by the first terminal device based on the first resource information, to the second terminal device the plurality of times through the sidelink based on the second resource information, **characterized in that** the access network device is configured for ultra-reliable and low latency communications, URLLC, transmission in a 5G communications system, wherein the access network device further comprises a processing module (12), and
the processing module (12) is configured to form the second resource information based on a to-be-cancelled uplink scheduling resource, or
the processing module (12) is configured to form the second resource information based on a new uplink resource allocated by the access network device for the second terminal device, wherein the new uplink resource is different from an uplink resource that has been scheduled by the access network device.

4. A system comprising the access node device according to claim 3 and a terminal device, wherein the terminal device is the first terminal device, the terminal device comprising:
a receiving module (22), configured to receive the first control information sent by the access network device; and
a sending module (21), configured to transmit the downlink data received by the receiving module from the access network device, to the second terminal device the plurality of times through the sidelink based on the first control information, wherein
the receiving module (22) is further configured to receive, based on the first resource information, the downlink data sent by the access network device; and
the sending module (21) is specifically configured to transmit, based on the coordinated transmission instruction and the second resource information, the downlink data to the second terminal device through the sidelink the plurality of times.

## Patentansprüche

1. Datenübertragungsverfahren, umfassend:
Senden (S201) von ersten Steuerinformationen durch eine Zugangsnetzwerkvorrichtung an ein erstes Endgerät, wobei die ersten Steuerinformationen verwendet werden, um das erste Endgerät anzuweisen, von der Zugangsnetzwerkvorrichtung empfangene Downlink-Daten eine Vielzahl von Male über einen Sidelink an ein zweites Endgerät zu übertragen; und
Senden (S202) der Downlink-Daten durch die Zugangsnetzwerkvorrichtung an das erste Endgerät, wobei die ersten Steuerinformationen eine koordinierte Übertragungsanweisung, erste Ressourceninformationen und zweite Ressourceninformationen umfassen; und
die koordinierte Übertragungsanweisung verwendet wird, um das erste Endgerät anzuweisen, die von dem ersten Endgerät basierend auf den ersten Ressourceninformationen empfangenen Downlink-Daten basierend auf den zweiten Ressourceninformationen eine Vielzahl von Malen über den Sidelink an das zweite Endgerät zu übertragen, **dadurch gekennzeichnet, dass** das Datenübertragungsverfahren für eine ultrazuverlässige und latenzarme Kommunikation (URLLC) in einem 5G-Kommunikationssystem durchgeführt wird, wobei das Verfahren ferner Folgendes umfasst
Bilden der zweiten Ressourceninformation durch die Zugangsnetzwerkvorrichtung auf der Grundlage einer zu stornierenden Uplink-Planungsressource, oder
Bilden der zweiten Ressourceninformationen durch die Zugangsnetzwerkvorrichtung basierend auf einer neuen Uplink-Ressource, die von der Zugangsnetzwerkvorrichtung für das zweite Endgerät zugewiesen wurde, wobei sich die neue Uplink-Ressource von einer Uplink-Ressource unterscheidet, die von der Zugangsnetzwerkvorrichtung geplant wurde.

2. Datenübertragungsverfahren nach Anspruch 1, ferner umfassend:
Empfangen (S203) der von der Zugangsnetzwerkvorrichtung gesendeten ersten Steuerinformationen durch das erste Endgerät; und
Übertragen (S205) einer Vielzahl der von dem ersten Endgerät von der Zugangsnetzwerkvorrichtung empfangenen Downlink-Daten an das zweite Endgerät über den Sidelink auf der Grundlage der ersten Steuerinformationen, wobei das Übertragen der Vielzahl der von dem ersten Endgerät von der Zugangsnetzwerkvorrichtung empfangenen Downlink-Daten an das zweite Endgerät über den Sidelink auf der Grundlage der ersten Steuerinformationen insbesondere Folgendes umfasst:
Empfangen (S204) der von der Zugangsnetzwerkvorrichtung gesendeten Downlink-Daten durch das erste Endgerät basierend auf den ersten Ressourceninformationen; und
Übertragen (S205) einer Vielzahl der Downlink-Daten durch das erste Endgerät an das zweite Endgerät über den Sidelink auf Grundlage der koordinierten Übertragungsanweisung und der zweiten Ressourceninformation.

3. Zugangsnetzwerkvorrichtung, umfassend:
ein Sendemodul (11), das dazu konfiguriert ist, erste Steuerinformationen an ein erstes Endgerät zu senden und Downlink-Daten an das erste Endgerät zu senden, wobei
die ersten Steuerinformationen verwendet werden, um das erste Endgerät anzuweisen, die von der Zugangsnetzwerkvorrichtung empfangenen Downlink-Daten eine Vielzahl von Malen über einen Sidelink an ein zweites Endgerät zu übertragen, wobei die ersten Steuerinformationen eine koordinierte Übertragungsanweisung, erste Ressourceninformationen und zweite Ressourceninformationen umfassen; und
die koordinierte Übertragungsanweisung verwendet wird, um das erste Endgerät anzuweisen, die von dem ersten Endgerät empfangenen Downlink-Daten basierend auf der ersten Ressourceninformation eine Vielzahl von Male über den Sidelink basierend auf der zweiten Ressourceninformation an das zweite Endgerät zu übertragen, **dadurch gekennzeichnet, dass** die Zugangsnetzwerkvorrichtung für eine ultrazuverlässige und latenzarme Kommunikation-, URLLC-, Übertragung in einem 5G-Kommunikationssystem konfiguriert ist, wobei die Zugangsnetzwerkvorrichtung ferner ein Verarbeitungsmodul (12) umfasst, und
das Verarbeitungsmodul (12) so konfiguriert ist, dass es die zweite Ressourceninformation auf der Grundlage einer zu stornierenden Uplink-Planungsressource bildet, oder
das Verarbeitungsmodul (12) dazu konfiguriert ist, die zweiten Ressourceninformationen auf der Grundlage einer neuen Uplink-Ressource zu erstellen, die von der Zugangsnetzwerkvorrichtung für das zweite Endgerät zugewiesen wurde, wobei sich die neue Uplink-Ressource von einer Uplink-Ressource unterscheidet, die von der Zugangsnetzwerkvorrichtung geplant wurde.

4. System, umfassend die Zugangsknotenvorrichtung nach Anspruch 3 und ein Endgerät, wobei das Endgerät das erste Endgerät ist und das Endgerät Folgendes umfasst:
ein Empfangsmodul (22), das zum Empfangen der von der Zugangsnetzwerkvorrichtung gesendeten ersten Steuerinformationen konfiguriert ist; und
ein Sendemodul (21), das dazu konfiguriert ist, die von dem Empfangsmodul von der Zugangsnetzwerkvorrichtung empfangenen Downlink-Daten basierend auf den ersten Steuerinformationen eine Vielzahl von Male über den Sidelink an das zweite Endgerät zu übertragen, wobei
das Empfangsmodul (22) ferner so konfiguriert ist, dass es basierend auf den ersten Ressourceninformationen die von der Zugangsnetzwerkvorrichtung gesendeten Downlink-Daten empfängt; und
das Sendemodul (21) speziell dazu konfiguriert ist, auf Grundlage der koordinierten Übertragungsanweisung und den zweiten Ressourceninformationen die Downlink-Daten eine Vielzahl von Malen über den Sidelink an das zweite Endgerät zu übertragen.

## Revendications

1. Procédé de transmission de données, comprenant :
l'envoi (S201), par un dispositif de réseau d'accès, de premières informations de commande à un premier dispositif terminal, dans lequel les premières informations de commande sont utilisées pour ordonner au premier dispositif terminal de transmettre des données de liaison descendante reçues du dispositif de réseau d'accès, à un second dispositif terminal une pluralité de fois via une liaison latérale ; et
l'envoi (S202), par le dispositif de réseau d'accès, des données de liaison descendante au premier dispositif terminal, dans lequel les premières informations de commande comprennent une instruction de transmission coordonnée, des premières informations de ressource et des secondes informations de ressource ; et
l'instruction de transmission coordonnée est utilisée pour ordonner au premier dispositif terminal de transmettre les données de liaison descendante reçues par le premier dispositif terminal sur la base des premières informations de ressource, au second dispositif terminal la pluralité de fois via la liaison latérale sur la base des secondes informations de ressource, **caractérisé en ce que** le procédé de transmission de données est réalisé pour une transmission de communications ultra-fiables et à faible latence, URLLC, dans un système de communications 5G, dans lequel le procédé comprend en outre :
la formation, par le dispositif de réseau d'accès, des secondes informations de ressource sur la base d'une ressource de planification de liaison montante à annuler, ou
la formation, par le dispositif de réseau d'accès, des secondes informations de ressource sur la base d'une nouvelle ressource de liaison montante attribuée par le dispositif de réseau d'accès au second dispositif terminal, dans lequel la nouvelle ressource de liaison montante est différente d'une ressource de liaison montante qui a été planifiée par le dispositif de réseau d'accès.

2. Procédé de transmission de données selon la revendication 1, comprenant en outre :
la réception (S203), par le premier dispositif terminal, des premières informations de commande envoyées par le dispositif de réseau d'accès ; et
la transmission (S205), par le premier dispositif terminal, des données de liaison descendante reçues par le premier dispositif terminal depuis le dispositif de réseau d'accès, au second dispositif terminal la pluralité de fois via la liaison latérale sur la base des premières informations de commande, dans lequel la transmission, par le premier dispositif terminal, de données de liaison descendante reçues par le premier dispositif terminal depuis le dispositif de réseau d'accès, au second dispositif terminal la pluralité de fois via la liaison latérale sur la base des premières informations de commande comprend spécifiquement :
la réception (S204), par le premier dispositif terminal sur la base des premières informations de ressource, des données de liaison descendante envoyées par le dispositif de réseau d'accès ; et
la transmission (S205), par le premier dispositif terminal sur la base de l'instruction de transmission coordonnée et des secondes informations de ressource, des données de liaison descendante au second dispositif terminal via la liaison latérale la pluralité de fois.

3. Dispositif de réseau d'accès, comprenant :
un module d'envoi (11), configuré pour envoyer des premières informations de commande à un premier dispositif terminal et envoyer des données de liaison descendante au premier dispositif terminal, dans lequel
les premières informations de commande sont utilisées pour ordonner au premier dispositif terminal de transmettre les données de liaison descendante reçues du dispositif de réseau d'accès, à un second dispositif terminal une pluralité de fois via une liaison latérale, dans lequel les premières informations de commande comprennent une instruction de transmission coordonnée, des premières informations de ressource et des secondes informations de ressource ; et
l'instruction de transmission coordonnée est utilisée pour ordonner au premier dispositif terminal de transmettre les données de liaison descendante reçues par le premier dispositif terminal sur la base des premières informations de ressource, au second dispositif terminal la pluralité de fois via la liaison latérale sur la base des secondes informations de ressource, **caractérisé en ce que** le dispositif de réseau d'accès est configuré pour une transmission de communications ultra-fiables et à faible latence, URLLC, dans un système de communications 5G, dans lequel le dispositif de réseau d'accès comprend en outre un module de traitement (12), et
le module de traitement (12) est configuré pour former les secondes informations de ressource sur la base d'une ressource de planification de liaison montante à annuler, ou
le module de traitement (12) est configuré pour former les secondes informations de ressource sur la base d'une nouvelle ressource de liaison montante attribuée par le dispositif de réseau d'accès au second dispositif terminal, dans lequel la nouvelle ressource de liaison montante est différente d'une ressource de liaison montante qui a été planifiée par le dispositif de réseau d'accès.

4. Système comprenant le dispositif de noeud d'accès selon la revendication 3 et un dispositif terminal, dans lequel le dispositif terminal est le premier dispositif terminal, le dispositif terminal comprenant :
un module de réception (22), configuré pour recevoir les premières informations de commande envoyées par le dispositif de réseau d'accès ; et
un module d'envoi (21), configuré pour transmettre les données de liaison descendante reçues par le module de réception depuis le dispositif de réseau d'accès, au second dispositif terminal la pluralité de fois via la liaison latérale sur la base des premières informations de commande, dans lequel
le module de réception (22) est en outre configuré pour recevoir, sur la base des premières informations de ressource, les données de liaison descendante envoyées par le dispositif de réseau d'accès ; et
le module d'envoi (21) est spécifiquement configuré pour transmettre, sur la base de l'instruction de transmission coordonnée et des secondes informations de ressource, les données de liaison descendante au second dispositif terminal via la liaison latérale la pluralité de fois.
